# EUROPEAN PATENT APPLICATION

(11) **EP 1 762 866 A1**
(43) Date of publication of application: **14.03.2007**
(21) Application number: 05292606.0
(22) Date of filing: 08.12.2005
(51) Int. Cl.: G02B 6/00

(54) **Direct type backlight**

(30) Priority: 19.08.2005 CN 200510090917
(71) Applicant: Shenzhen Diguang Electronics Co., Ltd., Nanshan District, Shenzhen City (CN)
(72) Inventor: Song, Yi, Nanshan District Shenzhen City (CN)
(74) Representative: Dronne, Guy

(57) **Abstract**

The invention relates to a direct type backlight with light-guide diffusing system and light source (1), which comprises at least one light source (1), at least one light-guide diffusing system, a reflecting material (4) placed below the light source (1) and the light-guide (2) diffusing system, a diffusing film placed above the light source (1) and the light-guide diffusing system, and a housing (10), wherein the light-guide diffusing system is composed of the light-guide material (2) around and above the light source (1). The light-guide material (2) located above the light source (1) is partially set as optic reflecting surface (3) or is partially applied with reflecting material (4). The lower surface of light-guide material (2) is provided with concavity or convexity . The backlight has greatly increased light efficiency and decreased general power consumption, in that it does not use the diffusing plate with lower light transmission in prior art, and the product cost can decrease since it uses less light source (1) to produce a thin and uniform backlight product.

## Description

### Technical field

The invention relates to a direct type backlight, in particular a direct type backlight comprising light-guide diffusing system and light source.

### Background art

The direct type backlight is used for the backlight source of Thin-Film Transistor Liquid Crystal Display(TFT-LCD) TV in the current market, which is usually provided with Cold Cathode Fluorescent Light(CCFL) or Light-Emitting Diode(LED) fixed directly on the bottom plate of the lower plane in the visible window of backlight or at a certain position away from the same plate and then the plane backlight is produced by adding the diffusing film on the diffusing plate with low light transmission or putting further Brightness Enhancement Film(BEF). Due to the small light diffusing angle of CCFL and LED, it is required that the tube light source (or LED light source) is densely arranged and the backlight products have to be thicker. Furthermore, one diffusing plate with low light transmission, diffusing film and BEF should be added to it. Thus, the density of the light source has to be increased in order for it to strengthen the brightness and to reduce the thickness, which results in lower light efficiency, more power consumption and more thickness of backlight products.

### Contents of the Invention

The object of the present invention is to provide a direct type backlight with light-guiding diffusing systems and light source, which utilizes the combination of the light guide material with the light source, in order to diffuse the light beam around the light source as much as possible. Namely, the diffusing angle of the light source is greatly increased based on the principle of light diffusion in the light-guiding diffusing systems. Thus, it is possible to produce thin and uniform backlight products with less numbers of light sources and to remove the diffusing plate with low light transmission so that the light efficiency can greatly increase. The product cost can be also decreased by the fact that the product configuration is very thin. Therefore, this backlight product will enable TFT-LCD TV to be more used in civil products.

The direct type backlight according to present invention comprises at least one light source, at least one light guide diffusing system, a reflecting material, a diffusing film and a housing. In particular, the backlight according to the present invention comprises one or more light sources which are placed in the visible window of the backlight and one or more light guide diffusing systems which are placed around and above the light sources. The light-guide diffusing system is composed of the light-guide material placed around and above the light source, wherein the light-guide material is located closely above the light source and is partially set as an optic reflecting surface or is partially applied with reflecting material. In the embodiment of the present invention, the light source and the light-guide diffusing system are set as an individual backlight system with one light source distributed to one light-guide diffusing system, or as an individual backlight system with several light sources distributed to one light-guide diffusing system in which the light-guide material covers the several light sources. The light source and the light-guide diffusing system can form a backlight system; said backlight system is composed of one system comprising a light source and a light-guide diffusing system, or is composed of more than one system comprising a light source and a light-guide diffusing system. When the backlight system is composed of several systems comprising a light source and a light-guide diffusing system for each system, one of the systems comprising a light source and a light-guide diffusing system is close to another system comprising a light source and light-guide diffusing system, or is arranged with another system at a distance which can be set based on the requirement.

The lower surface, the upper surface or both surface of the reflecting material are provided with concavity or convexity for light diffusing and reflecting. The light-guide material has various geometrical shape such as a plane, an inclined plane, a sphere or a combination with various geometrical structures whose sizes can be the same or different.

The reflecting material which is optionally provided with concavity or convexity or without those concavity and convexity is placed below the light source and the light-guide material. The diffusing film is placed above and away from the light source and the light-guide material.

Machining, laser, heat-press or printing is used for the processing of the concavity or convexity of reflecting material and light-guide material.

Furthermore, in another embodiment of the present invention, the diffusing plate, the Brightness Enhancement Film(BEF) and the upper diffusing film are placed above and away from the light source and the light-guide material, which are combined together with foresaid diffusing films.

All the components described above are placed inside the housing.

The abovementioned and other characteristics and advantages of the invention can be best understood through the following detailed description with reference to the drawings.

### Description of figures

Figure 1 shows a schematic view of the first embodiment of direct type backlight according to the present invention.
Figure 2 shows a schematic view of the second embodiment of direct type backlight according to the present invention.

### Mode of carrying out the invention

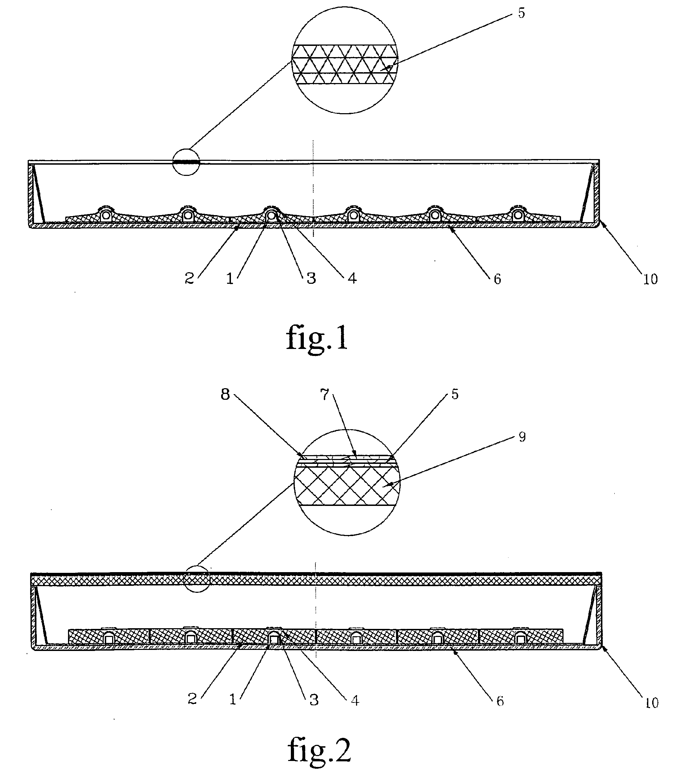

As shown in Figure 1, it is the preferable embodiment of the invention. One or more light sources 1 which can be Cold Cathode Fluorescent Light(CCFL) or Light-Emitting Diode(LED) are placed on the lower surface in the visible window of backlight. Light-guide material 2 is placed around and above each light source for light diffusing. The lower surface, the upper surface or both surfaces of the light-guide material 2 are provided with concavity or convexity for light diffusing and reflecting, and the light-guide material 2 placed closely above light source 1 is partially set as optic reflecting surface 3 or is partially applied with reflecting material 4, which form the light guide diffusing system corresponding to the foresaid light source 1, so as to make light beam over the light source 1 transmit less from the light-guide material 2 but diffuse as efficiently as possible at certain angles. In this case, the light-guide diffusing system comprising light source 1, light-guide material 2 and optic reflecting surface 3 or partially reflecting material 4 is set as an individual backlight system with one light source distributed to one light-guide diffusing system. Alternatively, several light sources are distributed to the light-guide material 2 of one light-guide diffusing system, which forms a backlight system in which the light-guide material 2 covers the several light sources.

Diffusing film 5 is placed above and away from the light source 1 and the light-guide material 2. Reflecting material 6 is placed below the light source 1 and the light-guide material 2. All the components described above are arranged in the housing 10.

Light-guide material 2 placed above and around the light source 1 can be designed with various geometrical shapes such as a plane, an inclined plane, a sphere surface or a combination with various geometrical structures whose sizes can be the same or different. The light-guide material 2 is made of plastic, such as Polycarbonate (PC), Polyethylene(PE ), Polymethyl methacrylate (PMMA), soft rubber, such as Silicon rubber, or resin such as Epoxide resin. The concavity or convexity of light-guide material 2 can be of any geometrical shape and the sizes can be the same or different. The concavity or convexity of light-guide material 2 is usually placed on the lower surface, the upper or both surfaces of light-guide material 2. When LED light source is used, the concavity or convexity on the surface of light-guide material 2 is made by the concentric circle series centered about the light source 1 or by the "V" shape groove series. When CCFL light source is used, the concavity or convexity on the surface of light-guide material 2 is made by the symmetrical concavity or convexity point and plane series or by the "V" shape groove series centered about the center line of parallel light source.

In the direct type backlight according to the present invention, the light source 1 and light-guide diffusing system can form a backlight system which is composed of one system comprising a light source 1 and a light-guide diffusing system, or a backlight system which is composed of several systems comprising a light source 1 and a light-guide diffusing system for each system. When the backlight system is composed of several systems comprising a light source 1 and a light-guide diffusing system for each system, one of the systems comprising a light source 1 and a light-guide diffusing system is closely arranged with another system comprising a light source 1 and a light-guide diffusing system, or is arranged with another system at a distance which can be set based on the requirement.

In the direct type backlight according to the invention, the light source 1 can be CCFL, LED or any other light source, in which LED light source can be monochromatic, dichromatic, tri-chromatic, multi-chromatic, or said LED light source is a white light source composed of blue LED and fluorescent material. CCFL light source is a linear light source. If CCFL is used for light source 1, when the light-guide material 2 is designed, the light-guide material 2 above and around the light source 1 can be set as an integrated one, the lower surface of the light-guide material 2 around the light sources 1 is provided with concavity or convexity, and the upper surface of the light-guide material 2 is provided with concave and convex surfaces, grinding surface, fog surface and smooth surface. LED light source is a kind of point light source. When LED is used for light source 1, light-guide material 2 around and above the point light source 1 can be set as an integrated one, namely, there is one concavity on light-guide material 2 directed to the point light-source 1 so that the LED light source can be covered. The concavity or convexity of light-guide material 2 directed to the LED light source can form an optic system such that the top light beam of LED can diffuse to the light-guide material 2 around it as much as possible, and then the light beam will be uniformly reflected and diffused through the optic system of the surface of light-guide material 2.

The top light beam of light source 1 is transmitted upward by the light-guide material 2, a part of the light beam is reflected into light-guide material 2 around the light source 1 by optic reflecting surface 3 or partially reflecting material 4 and is diffused or reflected through the concavity or convexity of light-guide material 2. The diffused or reflected light is then combined with the direct light beam from the top of light source 1, and becomes uniform after being transmitted by the diffusing film 5 with high light transmission described above. The other light beam from the light source 1 will either directly enter light-guide material 2 around the light source 1 or enter indirectly light-guide material 2 around the light source 1 after being reflected through reflecting material 6 which is placed below the light source 1 and light-guide material 2, then it is diffused or reflected through the concavity or convexity of Light-guide Material 2. The light beam will be uniform after being transmitted by the above diffusing film 5 with high light transmission.

Thus, it is possible to increase light efficiency and decrease general power consumption greatly through using the diffusing film with high light transmission instead of the diffusing plate with low light transmission of prior art, and reduce the product cost through producing thin and uniform backlight products with less light source numbers required.

The upper surface of reflecting material 6 placed below the light source 1 and light-guide material 2 is provided with concavity or convexity or without those concavity and convexity. When light-guide material 2 is hard material, nothing is needed to provide for the surface of reflecting material 6 as long as the original nature of the reflecting material remains. When light-guide material 2 is soft material, the upper surface of reflecting material 6 is provided with concavity or convexity, the shape of which is in accordance with the shape of concavity or convexity of light-guide material 2.

Machining, laser, chemical etch, heat-press or printing is used for the processing of the concavity or convexity of reflecting material 6 and light-guide material 2.

In another embodiment of the present invention, as shown in Figure 2, the diffusing plate 9, the Brightness Enhancement Film(BEF) 7 and the upper diffusing film 8 are placed above and away from the light source 1 and light-guide material 2 described above, and are combined together with the diffusing films 5.

The materials of diffusing film, diffusing plate, BEF and upper diffusing film according to the present invention are conventional as in the prior art, so that a person skilled in the art can select them based on his experience.

It should be understood that the foresaid descriptions with the embodiment is only explanatory and unrestrictive. The invention may be modified and amended in many places without separating from the scope and spirit of the invention, which are limited in the scope of this invention according to claims.

## Claims

1. A direct type backlight , which comprises at least one light source, at least one light-guide diffusing system, a reflecting material, a diffusing film and a housing, **characterized in that**:
The light-guide diffusing system is composed of the light-guide material placed around and above the light source, in which the light-guide material located closely above the light source is partially set as optic reflecting surface or is partially applied with reflecting material.

2. The direct type backlight according to the claim 1, **characterized in that** one or more light sources are placed in the visible window of the backlight.

3. The direct type backlight according to the claim 1, **characterized in that** one or more light-guide diffusing systems are placed around and above the light sources which are placed in the visible window of the backlight.

4. The direct type backlight according to the claim 1, **characterized in that** the reflecting material is placed below the light source and the light-guide material.

5. The direct type backlight according to the claim 1, **characterized in that** the lower surface, the upper surface or both surfaces of the reflecting material are provided with concavity or convexity which can be in any geometrical shapes and their sizes can be the same or different.

6. The direct type backlight according to the claim 1, **characterized in that** the light source and the light-guide diffusing system are set as an individual backlight system with one light source distributed to one light-guide diffusing system, or as an individual backlight system with several light sources distributed to one light-guide diffusing system in which the light-guide material covers the several light sources.

7. The direct type backlight according to the claim 1, **characterized in that** the light source and the light-guide diffusing system form a backlight system, said backlight system is composed of one system comprising a light source and a light-guide diffusing system, or is composed of more than one system comprising a light source and a light-guide diffusing system.

8. The direct type backlight according to the claim 1, **characterized in that** the light-guide material has a geometrical shape such as a plane, an inclined plane, a sphere or a combination with various geometrical shape whose sizes can be the same or different; the light-guide material can be plastic, soft rubber or resin.

9. The direct type backlight according to the claim 1 or 7, **characterized in that** when the backlight system is composed of several systems comprising a light source and a light-guide diffusing system for each system, one of the systems comprising a light source and light-guide diffusing system is closely arranged with another system comprising a light source and light-guide diffusing system, or is arranged with another system at a distance which can be set based on the requirement.

10. The direct type backlight according to the claim 1, **characterized in that** a diffusing plate, a brightness enhancement film and an upper diffusing film are placed above the light source and the light-guide material.

11. The direct type backlight according to the claim 1, **characterized in that** the light source can be CCFL, LED or any other light source.

12. The direct type backlight according to the claim 1, **characterized in that** the LED light source can be monochromatic, dichromatic, tri-chromatic or multi-chromatic, or said LED light source is a white light source composed of blue LED and fluorescent material.

13. The direct type backlight according to the claim 1, **characterized in that** the upper surface of the reflecting material is optionally provided with concavity or convexity, or without those concavity and convexity.

14. The direct type backlight according to the claim 1, **characterized in that** machining, laser, chemical etch, heat-press or printing is used for the processing of the concavity or convexity of reflecting material and light-guide material.
